# NEW EUROPEAN PATENT SPECIFICATION

(11) **EP 2 243 380 B2**
(45) Date of publication and mention of the opposition decision: **18.03.2015**
(45) Mention of the grant of the patent: 08.06.2011
(21) Application number: 09005585.6
(22) Date of filing: 21.04.2009
(51) Int. Cl.: A23D 9/013, A23D 9/007

(54) **A cooking oil composition**
Speiseölzusammensetzung
Composition d'huile de cuisson

(43) Date of publication of application: 27.10.2010
(73) Proprietor: Cargill, Incorporated, Wayzata, MN 55391 (US)
(72) Inventor: De Paepe, Jeroen, 9620 Sint-Maria-Oudenhove (BE); Heirman, Marc, 8500 Kortrijk (BE)
(74) Representative: Haegeman, Christophe Dominique René

(56) References cited:
- WO-A1-02/49444
- JP-A- 9 074 999
- JP-A- 54 107 908
- KR-A- 20060 079 895
- US-A- 4 399 165
- US-A1- 2002 012 739

## Description

### FIELD

This invention relates to cooking oil compositions, and more particularly to cooking oil compositions comprising lecithin, monoglycerides, and optionally organic acid esters.

### BACKGROUND

An oil or shortening composition is commonly used for preparation of a food composition, whether it be pan frying, shallow frying or deep frying. Margarines are also commonly used. Liquid oils are convenient for frying and contain less saturated fatty acids, as compared to butter and margarine. However, oils result in high spattering. On the other hand, butter and margarines have low spattering, but are solid or semi-solid at ambient temperatures and are not transparent.

Lecithin may commonly be used for anti-spattering. However, when used in an oil composition, lecithin tends to aggregate or form structures, which result in sedimentation within the oil composition. Sediments in the oil impact the stability of the oil, including a reduction in the transparency of the oil composition and, as a result, a non- homogeneous functionality of the oil. Natural lecithin is commonly removed from oil to prevent sedimentation.

There is a need for a liquid oil cooking composition that is transparent and stable, with low spattering.

Enging oil compositions have been disclosed in e.g., US 4 399 165 and WO 02/49444.

### SUMMARY

Provided herein are cooking oil compositions suitable for preparing a food product. Also provided herein are methods or processes for producing a cooking oil composition suitable for use in preparing a food product.

A cooking composition according to claim 1 is provided. The vegetable oil is in an amount equal to or greater than 90 wt % of the cooking composition and the oil is non-crystalline at a temperature equal to or greater than 10 degrees Celsius. The lecithin is in an amount ranging from 0.05 wt % to 2 wt % of the cooking composition and is selected from the group consisting of phosphatidyl choline (PC) rich lecithin, hydroxylated lecithin, and acetylated lecithin. The monoglycerides are in an amount ranging between 0.05 wt % and 2 wt % of the cooking composition, and the monoglycerides have a iodine value at least equal to or greater than 60. The lecithin and monoglycerides are dispersed and soluble in the oil; and the cooking composition is liquid and transparent at a temperature equal to or greater than 10 degrees Celsius.

In one aspect, the lecithin is an alcohol fractionated phosphatidyl choline (PC) enriched lecithin. In one aspect, the lecithin has a concentration of phosphatidyl choline that is at least about 30 wt % of the total amount of acetone insolubles in the lecithin.

In one aspect, the monoglycerides in the cooking composition have an iodine value at least equal to or greater than 60 and preferably greater than 70.

The cooking composition further comprises organic acid esters in an amount ranging between 0.1 wt % and 1 wt % of the cooking composition. In one aspect, the organic acid esters are neutralized citric acid esters.

In another embodiment, a process for producing a food product includes providing a cooking composition and frying the food product using the cooking composition.

In another embodiment, a process for producing a cooking composition suitable for use in preparing a food product includes adding lecithin and monoglycerides to a non-hydrogenated, non-crystalline vegetable oil and heating the oil to a temperature ranging between 60 and 70 degrees Celsius to dissolve the lecithin and monoglycerides in the oil. A cooking composition is formed having a stable dispersion of lecithin and monoglycerides. The cooking composition is transparent and liquid at temperatures equal to or greater than 10 degrees Celsius. The lecithin is selected from the group consisting of phosphatidyl choline (PC) rich lecithin, hydroxylated lecithin and acetylated lecithin. The monoglycerides have a iodine value at least equal to or greater than 60

The process for producing the cooking composition includes adding citric acid esters to the oil prior to heating the oil. The citric acid esters are also dissolved in the oil when the oil is heated.

In yet another embodiment, a process for producing a cooking composition suitable for use in preparing a food product includes combining an oil, lecithin and monoglycerides together to form a premix. The premix is heated to a temperature sufficient to essentially dissolve all of the lecithin and monoglycerides in the oil. The premix is then added to a second oil to form a cooking composition having oil, lecithin and monoglycerides. The cooking composition is liquid and transparent at a temperature equal to or greater than 10 degrees Celsius. An amount of lecithin in the cooking composition is from 0.05 wt % to 2 wt %. An amount of monoglycerides in the cooking composition is between 0.05 wt % and 2 wt %.

Citric acid esters are combined with the oil, lecithin and monoglycerides to form the premix. The premix is heated to a temperature sufficient to essentially dissolve all the citric acid esters in the oil.

### DETAILED DESCRIPTION

In the following description, reference is made to specific embodiments in which the invention may be practiced. It is to be understood that other embodiments may be utilized as changes may be made without departing from the scope of the present invention.

This disclosure provides for oil cooking compositions that are liquid at ambient temperatures and preferably transparent, thus having improved properties over standard liquid oils, while having anti-spattering properties comparable to margarine. The compositions comprise a non-hydrogenated vegetable oil, lecithin, monoglycerides, and organic acid esters. The cooking compositions described herein use a non-crystallized, non-hydrogenated vegetable oil. Lecithin and monoglycerides are added to the oil such that they are essentially completely dissolved in the oil and the oil remains non-crystalline, transparent, and without sedimentation at ambient temperatures (i.e. temperatures equal to or greater than about 20 degrees Celsius). (Ambient temperatures are also referred to herein as room temperature.) A particular combination of lecithin and monoglycerides, as described herein, results in a stable, liquid oil. The cooking compositions comprise organic acid esters, such as citric acid esters, which, in combination with lecithin, improve an anti-spattering effect of the compositions.

As used herein, a "stable oil" means that the oil is homogeneous and transparent for at least about one month at room temperature or about 20 degrees Celsius. (Room temperature may range between about 10 degrees Celsius and about 30 degrees Celsius.) As used herein, "transparent" means that the oil is not hazy and there is no aggregation of visible structures, like crystals, in the oil. Moreover, the oil is "homogeneous", which as used herein, means that there is no separation in the oil or sedimentation which may be defined as a visible layer which floats in the homogeneous phase (separation) or sinks to the bottom (sedimentation). An oil that is determined to be unstable because it is not transparent may be described herein as being opaque or having some degree of opaqueness. Even though a stable oil, as used herein, refers to an oil that is stable at ambient or room temperature, as shown in the Examples below, many of the cooking compositions described herein were also evaluated at fridge temperatures (between about 6 degrees Celsius and about 10 degrees Celsius).

As stated above under the Background section, lecithin tends to aggregate and sediment in oil. However, at certain concentrations, a combination of lecithin and monoglycerides in oil results in a cooking oil composition in which the lecithin is stabilized in the oil. As shown in the examples below, when citric acid esters are added to oil, the oil composition is unstable, partially as a result of turbidity. Moreover, a combination of lecithin and citric acid esters in oil results in an unstable oil composition. Thus, it was unexpected that a combination of lecithin, citric acid esters and monoglycerides in oil would result in a stable oil composition, at certain concentrations. The addition of citric acid esters to the oil composition further enhances the anti-spattering effect of the lecithin in the oil.

In some embodiments, the liquid cooking composition includes a non-hydrogenated, vegetable oil in an amount equal to or greater than about 90 wt % of the cooking composition, lecithin in an amount ranging from about 0.05 wt % to about 2 wt % of the cooking composition, monoglycerides in an amount ranging between about 0.05 wt % and about 2 wt % of the cooking composition, and citric acid esters in an amount ranging between 0 and about 1 wt %. In other embodiments, the liquid cooking composition includes lecithin in an amount ranging between about 0.05 wt % and about 0.5 wt %, monoglycerides in an amount ranging between about 0.05 wt % and about 1 wt %, and citric acid esters in an amount ranging between 0 and about 0.5 wt %.

For cooking compositions containing citric acid esters, the amount of monoglycerides in the cooking composition is dependent, in part, on the type of citric acid esters in the cooking composition. For example, if neutralized citric acid esters are used in the cooking composition, less monoglycerides may be required for a stable composition, as compared to a composition having standard citric acid esters. In some embodiments, the cooking composition comprises about 0.3 wt % lecithin, 0.5 wt % citric acid esters, and monoglycerides in an amount ranging between about 0.3 wt % and about 1.0 wt %.

The components making up the cooking composition are described in further detail below.

Non-hydrogenated, Vegetable Oil: The cooking composition is liquid at ambient temperatures and includes a natural oil or blend of oils. As used herein, "oil" includes a blend of oils. The oil is a non-hydrogenated (free of hydrogenated triglycerides) vegetable oil. The oil may be any type of vegetable oil, including, but not limited to olive oil, rapeseed oil, sunflower oil, palm oil, corn oil, rice bran oil, ground peanut oil, soybean oil, and blends thereof. The oil may be a cold pressed or a refined oil. The oil may be modified; an example of a modified oil, includes, but is not limited to, an interesterified oil.

The cooking composition described herein is a stable composition of a non-hydrogenated vegetable oil with lecithin and monoglycerides and organic acid esters. As described further below, the lecithin and monoglycerides are essentially completely dissolved in the oil, resulting in a stable composition. The oil used in the cooking compositions is non-crystalline and does not contain any hardstock (a fat with a high melting point > 40°C), in contrast to other oils which may contain hard stock in order to increase the viscosity of the oil and stabilize additives in the oil, such as, for example, citric acid esters and lecithin. It is preferred that oils for use in the cooking compositions described herein have a low melting point to avoid formation of crystals in the oil. In some embodiments, the oil is non-crystalline at temperatures equal to or greater than about 10 degrees Celsius. As used herein, "non-crystalline" means that the oil does not contain any appreciable amount of crystals. In some embodiments, the oil has a crystallization temperature that is less than 10 degrees Celsius. In some embodiments, the crystallization temperature is less than 5 degrees Celsius, and in yet other embodiments, less than 0 degrees Celsius.

The processing of the cooking compositions described herein may also be simplified, as compared to other cooking oils, since it is not required to cool down the oil once the lecithin and monoglycerides are added. In contrast, oils containing hardstock often require a cooling down step in order to form crystals in the oil.

In addition to being non-crystalline, the oil in the cooking composition is low in saturated fatty acids. As such, it is preferred that the process for making the cooking composition does not include any processing steps that would alter the degree of un-saturation of the fatty acids in the oil. In some embodiments the saturated fatty acids in the oil are less than about 20 wt % of the oil. In another embodiment, the saturated fatty acids in the oil are less than about 16 wt %, and in yet another embodiment, less than about 13 wt %.

In some embodiments, the cooking compositions described herein include at least about 90 wt % of the cooking composition. A specific amount of oil in the composition depends, in part, on the amounts of lecithin and monoglycerides, and an amount of organic acid esters. The amount of oil may also depend on whether any additional ingredients, such as, for example, additives, aromas and colorants, are present in the cooking composition.

Lecithin: The cooking compositions described herein include lecithin, which may be one or more food-grade lecithins. Lecithin contributes to low spattering levels for the cooking composition, but may also contribute to browning of the oil and foam formation. If the concentration of lecithin in the cooking composition is too low, higher spattering levels may be observed. However, if the concentration of lecithin is too high, an unacceptable amount of browning may be observed and an odor may be detectable. In addition, lecithin commonly sediments in oil. The cooking compositions described herein include a particular combination of lecithin, monoglycerides, and optionally citric acid esters, such that the lecithin is stabilized in the oil and does not sediment.

Lecithin includes a family of polar lipids, including phospholipids. Typically phospholipids are found in cell membrane structures and have a tendency to aggregate into structures, such as, for example, lamellar, hexagonal structures. A phospholipid or phosphatide is a molecule that is similar to a triglyceride, except that the sn3 position has a phosphate group and a functional group attached, rather than a third fatty acyl chain. Major phosphatides existing in plant oils include, for example, phosphatidyl choline (PC), phosphatidyl ethanolamine (PE), phosphatidyl serine, phosphatidyl glycerol, phosphatidyl inositol (PI), and phosphatidyl acid (PA). Lecithin also contains non-phosphatide components including, for example, triglycerides, sterols, tocopherols, and carbohydrates.

Lecithin may be a by-product of vegetable oil. Lecithin is typically produced after the extraction and before the oil-refining process. Because it is a by-product, the quality of the lecithin may vary a lot, depending, in part, on the quality and type of seeds from which the oils are produced. Lecithin may be produced from any vegetable oil, including, but not limited to, soya, sunflower, corn, cottonseed, and rapeseed. Lecithin also may be of animal origin, such as, for example, fish or eggs. Commercially available lecithins may be derived from soybeans, rapeseed, and sunflower seeds, and are available both in liquid form (e.g., dissolved in soybean or other edible oil) or in dry powdered form. Many lecithins are obtained from vegetable oil by mixing vegetable oil with water, which hydrates the lecithin and renders it substantially insoluble in the vegetable oil, thereby permitting centrifugal separation of the hydrated lecithin (gums) from the oil. The separated gums may be dried to provide a lecithin and redissolved in a suitable edible oil to provide a lecithin with a desidered viscosity.

In some embodiments, the lecithin in the cooking composition is a modified lecithin. Examples of a modified lecithin include, but are not limited to, hydrolyzed lecithin, acetylated lecithin and hydroxylated lecithin. Lecithin contains functional groups (e.g., double bonds) that make it reactive in a number of chemical reactions. As used herein the term "modified lecithin" refers to lecithin molecules that have been modified by reaction of one or more of the functional groups (e.g., double bonds) of the phosphatides with one or more reagents or enzymes that modify the chemical composition of the phosphatides. In other embodiments, the lecithin in the cooking composition is a combination of the types of lecithin described herein.

In some embodiments, the lecithin in the cooking composition is a PC rich lecithin. As used herein, a PC rich lecithin means the lecithin contains phosphatidyl choline (PC). In some embodiments, the PC rich lecithin is PC enriched, which means the lecithin has undergone a fractionation process and is PC fractionated. A typical method to fractionate lecithin is by adding alcohol to the lecithin in order to separate the lecithin into a PC rich fraction and a PC poor fraction. A PC rich lecithin formed by this process would be an alcohol fractionated PC enriched lecithin. In some embodiments, the PC rich lecithin is a lecithin containing a certain amount of phosphatidyl choline (PC), but the lecithin is not fractionated. In some embodiments, a PC concentration of the PC rich lecithin is at least about 30 wt % of the total amount of acetone insolubles. As described in further detail below, the PC concentration of lecithin is based on the acetone insoluble fraction of lecithin. It is recognized that PC rich lecithin may be formed by other known methods, such as, for example, adjusting pH.

Lecithin may be characterized by the amount of phosphatides in the lecithin, which may be determined by the "acetone insolubility (Al)" method defined in American Oil Chemists' Society (AOCS) Method Ja 4-46. As such, all types of lecithin may be expressed in terms of a percentage of acetone insolubles. For example, standard soy-based lecithin typically contains about 62 to 64 wt % Al; plastic soy lecithin typically contains a minimum of about 65 wt % to 68 wt % Al; and deoiled lecithin typically contains more than about 90 wt % Al. A soy bean lecithin with an Al of 62% consists typically of 12-18% PC, 10-15% PE, 8-11% PI, 3-8% PA, 5-7% glycolipids, 2-3% sterols, 5% carbohydrates, 36% of triglycerides, and 1% of moisture. The Al fraction is the same as the polar fraction of the lecithin, and contains the phospholipids, glycolipids and sterols and carbohydrates.

In some embodiments, the lecithin composition in the cooking composition is PC rich lecithin. A typical phosphotide composition of a PC rich lecithin is 35% PC, 8% PE and 1% PI. An example of a PC rich lecithin having a similar composition is Emulfluid™ lecithin available from Cargill, Incorporated, and more specifically, Emulfluid F30 lecithin. As described above, the PC concentration is based on the acetone insoluble fraction of lecithin. For the PC rich lecithin having 52 wt % Al, the amount of PC expressed on acetone insolubles is equal to 35% divided by 52%, or about 67%. Thus, the concentration of the PC is about 67 wt % of the total amount of acetone insolubles. In contrast, for the standard soy bean lecithin disclosed above having 62 wt % acetone insolubles and 12-18% PC, at 12% PC, the amount of PC expressed on acetone insolubles is equal to 12% divided by 62%, or about 19%.

In some embodiments, the lecithin used in the cooking composition comprises deoiled lecithin. Deoiled lecithin is typically prepared by treating fluid lecithin with acetone. Neutral lipids such as mono, di, and triglycerides, and free fatty acids are soluble in acetone. Thus, when lecithin is treated with acetone, the phosphatides precipitate a fine, freeflowing powder. In common practice, the crude lecithin is mixed with acetone and is agitated for a period of time, after which the deoiled product is allowed to settle. The triglyceride-acetone miscella is removed, and fresh acetone is added. The procedure may be repeated until the desired acetone insoluble (Al) content of the deoiled product is reached (e.g., 95 wt % minimum). The deoiled lecithin is then recovered, for example, by filtration. Native lecithin, modified lecithin and fractioned lecithin may be de-oiled, which as described immediately above, is done by means of an acetone extraction.

In some embodiments, the percentage of acetone insolubles in the lecithin composition is between about 50 wt % and about 98 wt %. As stated above, a deoiled lecithin, for example, may have a higher percentage of acetone insolubles. Typically, modified lecithin has an acetone insolubility of about 50 wt % or greater, for example, about 52 wt % or greater, about 54 wt % or greater, about 56 wt % or greater, about 58 wt % or greater, or about 60 wt % or greater. In some embodiments having PC rich lecithin, the PC concentration is at least about 30 wt % of the total amount of acetone insolubles; in other embodiments the PC concentration is at least about 40 wt % of the total amount of acetone insolubles; at least about 50 wt % of the total amount of acetone insolubles; at least about 60 wt % of the total amount of acetone insolubles; and at least about 70 wt % of the total amount of acetone insolubles.

In some embodiments, the cooking composition may comprise lecithin in an amount from about 0.05 wt % to about 2 wt % of the cooking composition. The amount of lecithin may depend, in part, on the type of lecithin used. For example, in some embodiments, lecithin is PC rich and ranges between about 0.1 wt % and 0.5 wt %. In some embodiments, the cooking composition comprises lecithin in an amount between about 0.05 wt % and about 0.2 wt %; between about 0.05 wt % and about 0.5 wt %; between about 0.05 wt % and about 1 wt %; between about 0.1 wt % and about 1 wt %; between about 0.2 wt % and about 1 wt %; between about 0.3 wt % and about 1 wt %; between about 0.4 wt % and about 1 wt %; between about 0.5 wt % and about 1 wt %; between about 0.6 wt % and about 1 wt %; between about 0.8 wt % and about 1 wt %; between about 0.3 wt % and about 0.7 wt %; between about 0.5 wt % and about 1.2 wt %; between about 0.5 wt % and about 1.5 wt %; between about 0.5 wt % and about 1.8 wt %; between about 0.5 wt % and about 2 wt %; between about 1 wt % and about 1.5 wt %; between about 1 wt % and about 1.8 wt %; and about 1 wt % and about 2 wt %.

As stated above, lecithin comprises polar lipids which tend to aggregate into structures. As such, lecithin is commonly removed from oil in order to prevent sedimentation of the lecithin in the oil. The cooking compositions described herein result in a stable lecithin-containing oil, in which the lecithin does not sediment during storage of the composition.

Monoglycerides: The cooking compositions described herein include monoglycerides. While not wishing to be bound by theory, it is believed that monoglycerides act as a dispersing agent and stabilize the lecithin in the oil. In other words, monoglycerides prevent lecithin from aggregating into structures, which result in sedimentation, turbidity and sinking of the structures to the bottom of the oil.

As used herein, "monoglycerides" includes monoglycerides and mono diglycerides of fatty acids. In some embodiments, it may be preferred to use distilled monoglycerides. In some embodiments, a higher weight percent of a composition of mono diglycerides may be used, in order to be equivalent in functionality to a distilled monoglyceride composition.

Monoglycerides can be high saturated, low saturated and mixtures thereof. The degree of saturation depends on what type of oil the monoglycerides are derived from. In some embodiments, low saturated monoglycerides are used in the cooking compositions described herein. In some embodiments, the monoglycerides are less than or equal to about 20% saturated fatty acids. Low saturated monoglycerides may be processed from non-hydrogenated vegetable oils, such as, for example, rapeseed oil and sunflower oil, including high oleic sunflower oil, and blends thereof. The cooking compositions described herein may also use monoglycerides derived from other types of vegetable oil. Moreover, monoglycerides can be derived from other sources, such as for example, palm oil and animal fat, or a blend of oil or fats.

As stated above in reference to the oil, the cooking compositions may use an oil that has a low melting point such that crystals do not form in the oil. Similarly, it is preferred that monoglycerides used in the cooking compositions also have a low crystallization temperature and a low melting point. Low saturation levels of monoglycerides result in the monoglycerides having a low melting point. The saturation levels in monoglycerides can be determined by the iodine value. The monoglycerides in the cooking compositions have an iodine value of at least about 60. In other embodiments, the iodine value of the monoglycerides is at least about 70, preferably at least 80; in yet other preferred embodiments, at least about 100.

In some embodiments, the cooking composition contains monoglycerides in an amount ranging between about 0.05 wt % and 2 wt %. In some embodiments, the amount of monoglycerides is between about 0.05 wt % and 1 wt %. As described in further detail below, an amount of monoglycerides in the cooking composition depends, in part, on the amount of lecithin and the type of lecithin in the cooking composition, including the lecithin quality, and organic acid esters present in the cooking composition. It is recognized that the amount of monoglycerides in the cooking compositions also depends on whether distilled monoglycerides or mono diglycerides are used. The cooking composition may contain a higher weight percent of mono diglycerides as compared to a comparable cooking composition contained distilled monoglycerides. For example, in a cooking composition having mono diglycerides, the amount of mono diglycerides may be as high as 5 wt %.

In some embodiments, the cooking composition comprises monoglycerides in an amount between about 0.05 wt % and about 0.2 wt %; between about 0.05 wt % and about 0.5 wt %; between about 0.05 wt % and about 1 wt %; between about 0.1 wt % and about 1 wt %; between about 0.2 wt % and about 1 wt %; between about 0.3 wt % and about 1 wt %; between about 0.4 wt % and about 1 wt %; between about 0.5 wt % and about 1 wt %; between about 0.6 wt % and about 1 wt %; between about 0.8 wt % and about 1 wt %; between about 0.3 wt % and about 0.7 wt %; between about 0.5 wt % and about 1.2 wt %; between about 0.5 wt % and about 1.5 wt %; between about 0.5 wt % and about 1.8 wt %; between about 0.5 wt % and about 2 wt %; between about 1 wt % and about 1.5 wt %; between about 1 wt % and about 1.8 wt %; between about 1 wt % and about 2 wt %; between about 0.5 wt % and about 5 wt %; between about 0.5 wt % and about 4 wt %; between about 0.5 wt % and about 3 wt %; between about 1 wt % and about 5 wt %; between about 1 wt % and about 4 wt %; and between about 1 wt % and about 3 wt %.

Organic acid esters: The cooking compositions comprise organic acid esters, such as, for example, citric acid esters. Organic acid esters may be used in combination with lecithin to improve an antispattering effect of the cooking composition. While not wishing to be bound by theory, it is believed that the combination of lecithin and citric acid esters has a synergistic effect in terms of the anti-spattering properties of the cooking composition. However, as shown below in the examples, a combination of lecithin and citric acid esters alone in an oil results in an unstable composition. As such, monoglycerides are used in combination with lecithin and citric acid esters to form a stable cooking oil composition.

In some embodiments, the organic acid esters are citric acid esters. It is recognized that other organic acid esters, such as, for example, tartaric acid and lactic acid may be used. As similarly described above in reference to the oil and monoglycerides, in some embodiments, it is preferred to use organic acid esters having low saturation. To form citric acid esters, a minimum amount of citric acid should be added to the monoglycerides to form the citric acid esters. If, for example, about 12 wt % citric acid is added to the monoglycerides, the monoglycerides are about 35% to about 40% esterified. It is recognized that esterification levels may vary for organic acid esters used in the cooking compositions.

In some embodiments, citric acid esters are neutralized by adding a hydroxide, for example sodium hydroxide, during formation of the citric acid esters from monoglycerides or mono-diglycerides. The pH of standard citric esters is typically between about 2.6 and about 4.0. The addition of sodium hydroxide results in a higher pH value. In some embodiments comprising neutralized citric acid esters (i.e. pH values about equal to or greater than about 4.5), a lower amount of monoglycerides may be used as compared to compositions containing standard citric acid esters. In some embodiments, the neutralized citric acid esters have a pH greater than about 5.3. It is noted that the pH value of the citric acid esters as described herein is the pH of the solution containing the citric acid and monoglycerides by which the citric acid esters are formed. As used herein, neutralized citric acid esters refers to citric acid esters having a pH about equal to or greater than about 4.5.

The amount of organic acid esters in the cooking composition is between about 0.1wt % and about 1 wt %. In other embodiments, the cooking composition contains between 0 and about 0.5 wt % organic acid esters. If the amount of organic acid esters is greater than 1 wt %, in some embodiments, the cooking composition becomes more hazy. It is generally known that adding citric acid esters to an oil composition results in a hazy composition. However, as supported by the examples below, at certain concentrations of citric acid esters, and in combination with lecithin and monoglycerides at certain concentrations, the cooking composition containing citric acid esters is transparent, and thus stable. For example, a cooking composition comprising about 0.3 wt % lecithin, about 0.5 wt % citric acid esters, and about 1.0 wt % monoglycerides is a transparent composition.

In some embodiments, the cooking composition comprises citric acid esters in an amount between 0 and about 1 wt %; between about 0.05 wt % and 1 % wt; between about 0.05 wt % and about 0.5 wt %; between about 0.1 wt % and about 0.5 wt %; between about 0.2 wt % and about 0.5 wt %; between about 0.3 wt % and about 0.5 wt %; between about 0.3 wt % and 0.8 wt %; between about 0.2 wt % and about 1.0 wt %; between about 0.5 wt % and 1.0 wt %; and between about 0.5 wt % and about 0.8 wt %.

Other optional ingredients: In some embodiments, the cooking composition may include one or more optional ingredients, such as, for example, aromas or herb extracts.

In some embodiments, the cooking composition comprises oil in an amount about equal to or greater than 90 wt % of the cooking composition, lecithin in an amount ranging between about 0.05 wt % and 2 wt %, and monoglycerides in an amount ranging between about 0.05 wt % and about 2 wt %. In some embodiments, the amount of lecithin in the cooking composition is about 0.5 wt % and the amount of monoglycerides is about 1.2 wt %. In some embodiments, the amount of monoglycerides is less than about 1.0 wt %; less than about 0.5 wt %; less than about 0.3 wt %; less than about 0.2 wt %; and less than about 0.1 wt %.

As described above, the amount of lecithin in the cooking composition depends, in part, on the type of lecithin used. As shown in the Examples below, in some embodiments, PC rich lecithin may be preferred. Using standard lecithin at concentrations between about 0.3 wt % and about 2 wt %, the compositions are typically unstable at monoglyceride levels at and below about 1 wt %. In contrast, using PC rich lecithin, compositions having about 0.5 wt % of monoglycerides were stable at lecithins amounts of 0.3 wt % and 0.5 wt %. Thus, a lower concentration of monoglycerides may be used in combination with PC rich lecithin.

In some embodiments, the composition comprises PC rich lecithin in an amount ranging between about 0.3 wt % and 0.7 wt %, and monoglycerides in an amount ranging between about 0.3 wt % and 0.5 wt %. In some embodiments, the composition comprises PC rich lecithin in an amount ranging between about 0.1 wt % and about 2.0 wt % and monoglycerides equal to about 0.1 wt %. In other embodiments, the composition comprises PC rich lecithin in an amount ranging between about 0.1 wt % and about 0.2 wt %, and monoglycerides equal to about 0.05 wt %.

The amount of lecithin and monoglycerides in the cooking composition may be expressed in terms of a ratio of lecithin to monoglycerides. In some embodiments, the ratio of lecithin to monoglycerides is about 1:1. For example, the amounts of lecithin and monoglycerides in the cooking composition may both be about 0.5 wt %. In another example, the amounts may both be about 0.1 wt % or about 0.2 wt %. In some embodiments, the ratio of lecithin to monoglycerides is greater than 1:1. In some embodiments, the ratio of lecithin to monoglycerides ranges between about 1:1 and about 20:1. In other embodiments, the ratio is about 2:1. In yet other embodiments, the ratio is about 4:1.

In some embodiments, the ratio of lecithin to monoglycerides is about equal to or less than 1:1. In some embodiments, the ratio of lecithin to monoglycerides ranges between about 1:1 and about 1:5. In some embodiments, the ratio of lecithin to monoglycerides ranges between about 1:1 and about 1:10. For example, the amount of lecithin in the cooking composition may be about 0.1 wt % and the amount of monoglycerides in the cooking composition may be about 0.5 wt %. In another example, the amount of lecithin in the cooking composition may be about 0.1 wt % and the amount of monoglycerides in the cooking composition may be about 1.0 wt %. In some embodiments comprising citric acid esters, the ratio of lecithin to monoglycerides is about 1:1; in other embodiments, about 1:2; in yet other embodiments, about 1:3.

The cooking composition is a combination of a non-hydrogenated vegetable oil, lecithin, monoglycerides and citric acid esters. In some embodiments, the cooking composition comprises an oil in an amount about equal to or greater than 90 wt % of the cooking composition, lecithin in an amount ranging between about 0.05 wt % and 2 wt %, monoglycerides in an amount ranging between about 0.3 wt % and about 2 wt %, and citric acid esters in an amount ranging between about 0.1 wt % and 1 wt %. In some cases, a larger percentage of monoglycerides may be used, as compared to cooking compositions containing lecithin and monoglycerides, without citric acid esters. In some embodiments, the cooking composition comprises about 0.3 wt % lecithin, 0.5 wt % citric acid esters, and 1.0 wt % monoglycerides.

As shown in the examples below, by using a neutralized citric acid ester, a lower amount of monoglycerides may be used, as compared to an amount of monoglycerides used with standard citric acid esters. In some embodiments, the cooking composition comprises about 0.3 wt % lecithin, 0.5 wt % citric acid esters, and 0.8 wt % monoglycerides. In some embodiments, the cooking composition comprises about 0.3 wt % lecithin, 0.5 wt % citric acid esters, and 0.6 wt % monoglycerides. In some embodiments, the cooking composition comprises about 0.3 wt % lecithin, 0.5 wt % citric acid esters, and 0.4 wt % monoglycerides.

Processing steps: To make the cooking compositions described herein, in some embodiments, lecithin, monoglycerides and citric acid esters are added to a vegetable oil. The composition is then heated to a temperature such that all of the lecithin, monoglycerides and citric acid esters are essentially completely dissolved in the oil. In some embodiments, the composition is heated to a temperature ranging between about 60 and about 70 degrees Celsius. The composition may be mixed at, for example, 10,000 rpms for one minute. Shear mixing is not required.

In some embodiments, lecithin and monoglycerides are added to a first oil to form a premix, which is then heated to a temperature sufficient such that the lecithin and monoglycerides are essentially all dissolved in the oil. The premix is then added to a second oil to form the cooking composition. In some embodiments, the second oil may be the same as the first oil; in other embodiments, the second oil may be a different type of oil than the first oil or a different blend of oils. The citric acid esters are also added to the first oil, with lecithin and monoglycerides, to form the premix. The citric acid esters are heated in the premix such that the citric acid esters are also essentially completely dissolved in the first oil.

It is recognized that the cooking composition may be formed by different methods. As described above, the lecithin, monoglycerides and citric acid esters may be first added to a smaller volume of oil to form a premix which is then heated. Alternatively, the cooking composition may be formed and then heated. Regardless of the process or method used, in preferred aspects, the blend of lecithin, monoglycerides and citric acid esters are essentially completely soluble or dissolved in the oil such that the oil is substantially free of any structures at temperatures equal to or greater than about 10 degrees Celsius. Because the oil is to remain crystal free, processing of these cooking compositions does not require a cooling down step to form crystalline structures.

Bottled oil: In some embodiments, the cooking compositions described herein may be packaged in a transparent bottle. The cooking compositions are suitable for room temperature storage. In some embodiments, the cooking composition remains transparent and stable for at least about one month, assuming the bottle is generally stored at room temperature. Although the cooking composition may be stable at temperatures below ambient or room temperature, the composition is designed for room temperature storage.

The examples below illustrate embodiments of the cooking compositions described herein.

### EXAMPLES

### Example 1- Stability of Oil and Lecithin compositions

The purpose of this example was to study the effect of oil and lecithin on the stability of the composition. In Example 1 and the other examples disclosed in this section, stability of the compositions was based on sedimentation and transparency, both of which were evaluated visually. In these examples, if sedimentation and/or opaqueness was observed, the sample composition was deemed "unstable".

The compositions below contained 99.5 wt % rapeseed oil and 0.5 wt % lecithin. The rapeseed oil used in this example, as well as the other examples below, may be purchased from Vandemoortele. Various types of lecithin, as shown in Table 1 below, were evaluated.

**Table 1. Results of Lecithin in Oil**

| **Lecithin** | **Supplier** | **Description** | **Source** | **Stability** |
|---|---|---|---|---|
| Topcithin™ NGM | Cargill | Standard | Soybean | Unstable (1 week) |
| Emulfluid™ NGM | Cargill | Hydrolysed | Soybean | Unstable (1 week) |
| Emulfluid™ F30 | Cargill | PC rich | Soybean | Unstable (1 week) |
| Emulfluid™ SE NGM | Cargill | Hydrolysed | Soybean | Unstable (1 week) |

As shown in Table 1 above, all of the lecithins were determined to be unstable after one week, since sedimentation and/or opaqueness were observed for all samples. The results of this study show that all of the lecithins were unstable in the oil when used alone with rapeseed oil.

### Example 2 - Stability of Oil and Citric Acid Ester compositions

The purpose of this example was to study the effect of oil and citric acid ester on stability. The evaluation was performed similar to Example 1 above. The compositions contained 99.5 wt % rapeseed oil and 0.5 wt % of various citric acid esters.

**Table 2. Results of Citric Acid Esters in Oil**

| **Citric Acid Ester** | **Supplier** | **Oil source** | **Iodine value** | **melting range** | **acid value** | **Stability** |
|---|---|---|---|---|---|---|
| Sugin 472 C IKV | Cargill | Hydrogenated palm | < 3 | 58 - 62°C | < 25 | Unstable (1 day) |
| Sugin 472 C HI | Cargill | Hydrogenated palm | < 3 | 59 - 63°C | 60 - 90 | Unstable (1 day) |
| Grindsted citrem LR 10 | Danisco | Sunflower | ∼ 65 | Not defined | 20 - 40 | Unstable (1 day) |
| Sugin 472 C J | Cargill | Sunflower | 85 - 100 | Not defined | 50-100 | Unstable (1 day) |

The results of this study show that all of the citric acid esters were unstable in the oil. However, some of the citric acid esters sedimented less than others. More specifically, less sedimentation was observed for the citric acid esters having higher iodine values (Grindsten citrem LR 10 and Sugin 472 C J), as compared to Sugin 472 C IKV and Sugin 472 C HI

### Example 3-Stability of Oil, lecithin and monoglyceride compositions

The purpose of this study was to evaluate the effect on stability when lecithin and monoglycerides are used in combination in an oil. The compositions contained 99.0 wt % rapeseed oil, 0.5 wt % of various types of lecithin and 0.5 wt % of various types of monoglycerides. The lecithins in this example are three of the four lecithins disclosed in Table 1 above. The types of monoglycerides used in this example are shown in Table 3 immediately below.

**Table 3. Properties of Monoglycerides used in study**

| | **Supplier** | **Oil source** | **Iodine value** | **Melting range** | **MG content** |
|---|---|---|---|---|---|
| Dimodan U/J | Danisco | Sunflower | ∼105 | ∼45°C | > 90% |
| Cargill monoglyceride (Monoestearato de glicerina) | Cargill | Hydrogenated Oil | < 3 | 63 - 68°C | > 95% |

Dimodan U/J and Cargill monoglyceride are distilled monoglycerides. Table 4 contains the various combinations of monoglycerides and lecithin evaluated, as well as the resulting stability results.

**Table 4. Results of Monoglycerides and Lecithin in Oil**

| **MDG** | **Lecithin** | **Stability** |
|---|---|---|
| **Dimodan U/J** | Topcithin NGM | unstable 2 weeks |
| | Emulfluid NGM | unstable 1 week |
| | **Emulfluid F30** | **Stable 1 month** |
| MG Cargill | Topcithin NGM | unstable < 1 week |
| | Emulfluid NGM | unstable < 1 week |
| | Emulfluid F30 | unstable < 1 week |

PC rich lecithin (Emulfluid F30) was most stable in combination with monoglycerides having a high iodine value (i.e. a low melting point distilled monoglyceride).

### Example 4: Additional evaluation of lecithin in combination with monoglycerides

The purpose of this study was to further evaluate lecithin in combination with monoglycerides in oil. Compositions were evaluated with standard lecithin at concentrations of about 0.3 wt %, about 0.5 wt %, and about 2.0 wt %. The amount of monoglycerides also varied between about 0.05 wt % and 1.0 wt %.

**Table 5. Results of Standard lecithin with monoglycerides**

| | **Standard Lecithin (Topcithin NGM) + Monoglyceride (Dimodan U/J)** | | |
|---|---|---|---|
| **Concentration lecithin** | 0.30% | 0.50% | 2.00% |
| **One week** | | | |
| Room Temp | Not stable | Not stable | Not stable |
| Fridge Temp | Not stable | Not stable | Not stable |
| **One month** | | | |
| Room Temp | Not stable | Not stable | Not stable |
| Fridge Temp | Not stable | Not stable | Not stable |
| **Concentration range tested for monoglyceride** | 0.05-1 % | 0.1-1 % | 0.2-1 % |

The results in Table 5 above show that none of the compositions having standard lecithin were stable for the monoglyceride range tested. All of the compositions had a slight turbidity and some sedimentation was observed.

Samples were prepared with PC rich lecithin (Emulfluid F 30) at varying levels (see Table 6 below) in order to compare PC rich lecithin to standard lecithin in Table 5. For the samples having PC rich lecithin, the lowest concentration of monoglycerides evaluated was 0.05 wt % for each concentration of lecithin. The concentration shown in Table 6 is the lowest concentration of monoglycerides required to obtain a stable oil composition. All concentrations of monoglycerides higher than the concentration shown in Table 6 were also stable up to the maximum concentration tested, with the exception of compositions containing 2 wt % lecithin, which are described in further detail below. An entry of 'Not stable' in Table 6 means, at that lecithin concentration, none of the samples were stable across the monoglyceride range tested.

**Table 6. Results of PC rich lecithin with monoglycerides**

| | **PC rich lecithin (Emulfluid F30) + Monoglyceride (Dimodan U/J)** | | | |
|---|---|---|---|---|
| **Concentration lecithin** | 0.1% | 0.2% | 0.5% | 2.0% |
| **One week** | | | | |
| Room Temp | 0.05% | 0.05% | 0.10% | 0.10% |
| Fridge Temp | 0.10% | 0.20% | 0.20% | Not Stable |
| **Two weeks** | | | | |
| Room Temp | 0.05% | 0.10% | 0.10% | 0.20% |
| Fridge Temp | Not evaluated | Not evaluated | Not evaluated | Not evaluated |
| | | | | |
| **One month** | | | | |
| | | | | 0.5 to 1% - Stable |
| Room Temp | 0.05% | 0.15% | 0.20% | 2 to 5% - Not Stable |
| Fridge Temp | Not Stable | Not Stable | Not Stable | Not Stable |
| | | | | |
| **Concentration range tested for MG** | 0.05-0.5% | 0.05-0.2% | 0.05-1% | 0.05-5% |

As shown in Table 6, at monoglyceride concentrations of 0.1 wt % and higher, the compositions were stable for at least one week at room temperature at the tested lecithin levels between 0.1 wt % and 2.0 wt %. At monoglyceride concentrations of 0.2 wt % and higher, the compositions were stable at all lecithin levels in Table 6 for at least one week at fridge temperature. At monoglyceride concentrations as low as 0.05 wt %, stable compositions were observed at room temperature for lecithin concentrations of 0.1 wt % and 0.2 wt %. A comparison of the results from Tables 5 and 6 show that a lower concentration of monoglycerides may be used to form a stable composition if the lecithin is PC rich lecithin.

Table 6 also shows, however, that at high levels of both lecithin and monoglycerides, the compositions become unstable. At a lecithin concentration of 2.0 wt %, the compositions were stable at monoglyceride concentrations of 0.5 wt % and 1.0 wt %. However, at the same lecithin concentration (2.0 wt%), the compositions were unstable at monoglycerides concentrations of 2 wt % and 5 wt %.

### Example 5: Stability of Oil, lecithin and citric acid ester compositions

The purpose of this study was to evaluate the combination of lecithin and citric acid esters in an oil. The compositions in Table 8 below contained 99.0 wt % rapeseed oil, 0.5 wt % lecithin, and 0.5 wt % citric acid esters. Table 7 shows the iodine value for each of the three citric acid esters evaluated in Table 8, which are three of the four citric acid esters evaluated in Example 2.

**Table 7. Iodine values for Citric acid esters**

| **Citric Acid Ester** | **Iodine value** |
|---|---|
| Sugin 472 C IKV | < 3 |
| Grindsted citrem LR 10 | ∼ 65 |
| Sugin 472 C J | 85 -100 |

**Table 8. Results of Citric acid esters and lecithin in Oil**

| **Citric acid ester** | **Lecithin** | **Stability** |
|---|---|---|
| Sugin 472 IKV | Topcithin NGM | Unstable - 1 week |
| | Emulfluid NGM | Unstable - 1 week |
| | Emulfluid F30 | Unstable - 1 week |
| | | |
| Grindsted | Topcithin NGM | Unstable - 1 week |
| citrem LR 10 | Emulfluid NGM | Unstable - 1 week |
| | Emulfluid F30 | Unstable - 1 week |
| | | |
| Sugin 472 CJ | Topcithin NGM | Unstable - 1 week |

The addition of citric acid esters alone does not improve the stability of the lecithin in oil. The addition of citric esters with low iodine value results almost immediately in sedimentation. Although Table 8 shows observations on a weekly basis, sedimentation was observed much earlier for samples having citric esters with low iodine values. For those samples having a combination of a citric acid ester with a high iodine value and PC rich lecithin, sedimentation was not observed until about two weeks.

### Example 6 - Stability of oil, monoglycerides and citric acid esters compositions

The purpose of this study was to evaluate the combination of monoglycerides and citric acid esters in an oil. The samples or compositions of Table 9 contained 99.0 wt % rapeseed oil, 0.5 wt % monoglycerides, and 0.5 wt % citric acid esters. Two of the three citric acid esters are from Table 7 (i.e. those with higher iodine values).

When monoglycerides are used in combination with citric acid esters, all of the oil compositions were unstable after one week.

### Example 7 - Impact on stability of neutralizing citric acid esters

The purpose of this example was to evaluate the stability of cooking compositions having a combination of lecithin, monoglycerides and citric acid esters. In addition, this example analyzed whether neutralizing the citric acid esters in the cooking composition impacted stability. The samples contained 0.3 wt % PC rich lecithin (Emulfluid F30), 0.5 wt % citric ester (Sugin 472 CJ), and distilled monoglycerides (Dimodan U/J) varying between about 0.2 wt % and 1.0 wt %. Citric acid esters at varying pH levels were evaluated, as shown in Table 11 below. The citric acid esters were neutralized to varying levels by increasing the pH of the solution to the values shown in the table below. The "standard" citric acid esters had a pH value between about 2.6 and about 4.0. The citric acid esters are neutralized when the citric acid esters are formed from monoglycerides and citric acid. First, the monoglycerides are placed in a reactor and heated up to about 180 degrees Celsius with nitrogen flow and agitation. Citric acid esters are then added to the reactor and the reactor is maintained at about 180 degrees Celsius for about 90 minutes, maintaining agitation and nitrogen flow. Next, the reactor is cooled to about 95 degrees Celsius and sodium hydroxide is added to the reactor. The reactor is maintained at 95 degrees Celsius for about 30 minutes. The reactor is then cooled to about 50 degrees Celsius and the citric acid ester composition is removed and packaged. The amount of sodium hydroxide added to the reactor determines the pH of the composition in the reactor, and thus the degree to which the citric acid esters are neutralized.

The pH of the citric acid esters is measured after the composition is removed from the reactor. A small sample of the composition is used to determine pH. The sample is added to water (i.e. neutral pH) in an amount such that the water solution contains 5 wt % of citric acid ester. The water solution containing the citric acid ester is then heated to approximately 60 to 65 degrees Celsius, while simultaneously stirring. The water solution is then cooled to approximately 25 degrees Celsius. The pH is then measured, e.g. with a pH probe.

The values in the table below show the minimum concentration of monoglcyerides required to obtain a stable composition. Monoglycerides concentrations higher than the concentration shown in Table 10 were also stable up to 1 wt %. An entry of 'Not stable' means that none of the compositions were stable across the monoglyceride range tested. Stability was determined after storing the composition at room temperature and at fridge temperature for one week, as well as after storing for one month at room temperature and at fridge temperature.

**Table 10. Results of neutralized citric acid esters**

| | **PC enriched lecithin at 0.3 wt% (Emulfluid F30), Monoglycerides (Dimodan U/J) and Citric Acid Esters at 0.5 wt % (Sugin 472 CJ)** | | | | |
|---|---|---|---|---|---|
| | **Standard (pH 2.6-4)** | **pH 4.2** | **pH 5.3** | **pH 5.8** | **pH 6.3** |
| **After +/-1 week** | | | | | |
| Room Temp | 1.0% | 1.0% | 0.6% | 0.6% | 0.4% |
| Fridge Temp | Not stable | Not stable | Not stable | Not stable | Not stable |
| | | | | | |
| **After +/-1 month** | | | | | |
| Room Temp | 1.0% | 1.0% | 0.6% | 0.8% | 0.4% |
| Fridge Temp | Not stable | Not stable | Not stable | Not stable | Not stable |
| | | | | | |
| **Concentration range tested for MG** | 0.2-1% | 0.2-1% | 0.2-1% | 0.2-1% | 0.2-1% |

Results in the table above show that as the pH increases, a lower amount of monoglyerides is required in order to obtain a stable composition at room temperature. In other words, neutralizing the citric acid esters in the cooking composition allows for lower amounts of monoglycerides. For example, at pH values of 4.2 and lower, 1.0 wt % of monoglycerides resulted in a stable composition at room temperature after 1 week and 1 month. In contrast, at pH of 5.3, 0.6 wt % of monoglycerides resulted in a stable composition at room temperature after one week and after one month. Moreover, at pH of 6.3, only 0.4 wt % of monoglycerides was needed for a stable composition after 1 week at room temperature, and 0.4 wt % of monoglycerides for a stable composition after 1 month at room temperature.

### OTHER EMBODIMENTS

It is to be understood that while the invention has been described in conjunction with the detailed description thereof, the foregoing description is intended to illustrate and not limit the scope of the invention, which is defined by the scope of the appended claims.

## Claims

1. A non-aqueous, liquid cooking composition comprising:
a non-hydrogenated, vegetable oil in an amount equal to or greater than 90 wt. % of the cooking composition, wherein the oil is non-crystalline at a temperature equal to or greater than 10 degrees Celsius;
lecithin in an amount ranging from 0.05 wt. % to 2 wt. % of the cooking composition, wherein the lecithin is selected from the group consisting of phosphatidyl choline (PC) rich lecithin, hydroxylated lecithin, and acetylated lecithin; and
monoglycerides in an amount ranging between 0.05 wt. % and 2 wt. % of the cooking composition, wherein the monoglycerides have a iodine value at least equal to or greater than 60, and
wherein the lecithin and monoglycerides are dispersed and soluble in the oil, and
wherein the cooking composition is liquid and transparent at a temperature equal to or greater than 10 degrees Celsius, and further comprising:
organic acid esters in an amount ranging between 0.1 wt. % and 1 wt. % of the cooking composition.

2. The cooking composition of claim 1 wherein the organic acid esters are citric acid esters in an amount equal to or less than 0.5 wt. % of the cooking composition, and the amount of monoglycerides in the cooking composition is between 0.3 wt. % and 1.0 wt. %.

3. The cooking composition of claim 1 wherein the organic acid esters are neutralized citric acid esters.

4. A process for producing a food product comprising:
providing a cooking composition according to claims 1-3; and
frying the food product using the cooking composition.

5. A process for producing a cooking composition suitable for use in preparing a food product, the process comprising:
adding lecithin and monoglycerides to a non-hydrogenated, non-crystalline vegetable oil, wherein the lecithin is selected from the group consisting of phosphatidyl choline (PC) rich lecithin, hydroxylated lecithin and acetylated lecithin and wherein the monoglycerides have a iodine value at least equal to or greater than 60;
heating the oil to a temperature ranging between 60 and 70 degrees Celsius to dissolve the lecithin and monoglycerides in the oil and form a cooking composition having a stable dispersion of lecithin and monoglycerides, wherein the cooking composition is transparent and liquid at temperatures equal to or greater than 10 degrees Celsius, and
further comprising, adding citric acid esters to the oil prior to heating the oil, wherein the citric acid esters are also dissolvable in the oil when the oil is heated.

6. A process for producing a cooking composition suitable for use in preparing a food product, the process comprising:
combining a first oil, lecithin and monoglycerides to form a premix, wherein the premix is heated to a temperature sufficient to essentially dissolve all of the lecithin and monoglycerides in the first oil, and wherein the lecithin is selected from the group consisting of phosphatidyl choline (PC) rich lecithin, hydroxylated lecithin and acetylated lecithin and wherein the monoglycerides have a iodine value at least equal to or greater than 60; and adding the premix to a second oil to form a cooking composition having lecithin in an amount ranging between 0.05 wt. % and 2 wt. % of the cooking composition and monoglycerides in an amount ranging between 0.05 wt. % and 2 wt. % of the cooking composition, wherein the cooking composition is liquid and transparent at a temperature equal to or greater than 10 degrees Celsius, and further comprising combining citric acid esters with the first oil, lecithin and monoglycerides to form the premix, wherein the premix is heated to a temperature sufficient to essentially dissolve all the citric acid esters in the first oil.

7. The process of claim 6 wherein a composition of the first oil is essentially equivalent to a composition of the second oil.

## Patentansprüche

1. Nichtwässrige, flüssige Kochzusammensetzung, enthaltend:
ein ungehärtetes pflanzliches Öl in einer Menge, die gleich oder größer als 90 Gew.-% der Kochzusammensetzung ist, wobei das Öl bei einer Temperatur gleich oder größer als 10 °C nichtkristallin ist;
Lecithin in einer Menge im Bereich von 0,05 Gew.-% bis 2 Gew.-% der Kochzusammensetzung, wobei das Lecithin ausgewählt ist aus einer Gruppe bestehend aus Phosphatidylcholin (PC)-reichem Lecithin, hydroxyliertem Lecithin und acetyliertem Lecithin; und
Monoglyceride in einer Menge im Bereich zwischen 0,05 Gew.-% und 2 Gew.-% der Kochzusammensetzung, wobei die Monoglyceride einen Jodwert haben, der mindestens gleich oder größer als 60 ist, und
wobei das Lecithin und die Monoglyceride in dem Öl dispergiert und löslich sind, und
wobei die Kochzusammensetzung bei einer Temperatur gleich oder größer als 10 °C flüssig und transparent ist, und ferner umfassend:
organische Säureester in einer Menge im Bereich zwischen 0,1 Gew.-% und 1 Gew.-% der Kochzusammensetzung.

2. Kochzusammensetzung nach Anspruch 1, bei welcher die organischen Säureester Zitronensäureester in einer Menge sind, die gleich oder geringer als 0,5 Gew.-% der Kochzusammensetzung ist, und die Menge von Monoglyceriden in der Kochzusammensetzung zwischen 0,3 Gew.-% und 1,0 Gew.-% ist.

3. Kochzusammensetzung nach Anspruch 1, bei welcher die organischen Säureester neutralisierte Zitronensäureester sind.

4. Verfahren zur Herstellung eines Lebensmittelprodukts, enthaltend:
Bereitstellen einer Kochzusammensetzung gemäß den Ansprüchen 1-3; und
Braten des Lebensmittelprodukts unter Verwendung der Kochzusammensetzung.

5. Verfahren zur Herstellung einer Kochzusammensetzung, die zur Verwendung bei der Herstellung eines Lebensmittelprodukts geeignet ist, welches Verfahren enthält:
Zugabe von Lecithin und Monoglyceriden zu einem ungehärteten, nichtkristallinen pflanzlichen Öl, wobei das Lecithin ausgewählt ist aus der Gruppe bestehend aus Phosphatidylcholin (PC)-reichem Lecithin, hydroxyliertem Lecithin und acetyliertem Lecithin, und wobei die Monoglyceride einen Jodwert haben, der mindestens gleich oder größer als 60 ist;
Erwärmen des Öls auf eine Temperatur im Bereich zwischen 60 und 70 °C, um das Lecithin und die Monoglyceride in dem Öl aufzulösen und eine Kochzusammensetzung zu bilden, die eine stabile Dispersion von Lecithin und Monoglyceriden hat, wobei die Kochzusammensetzung bei Temperaturen gleich oder höher als 10 °C transparent und flüssig ist, und
ferner umfassend das Zugeben von Zitronensäureestern zu dem Öl vor dem Erwärmen des Öls, wobei die Zitronensäureester ebenfalls in dem Öl auflösbar sind, wenn das Öl erwärmt wird.

6. Verfahren zur Herstellung einer Kochzusammensetzung, die zur Verwendung bei der Herstellung eines Nahrungsmittelprodukts geeignet ist, welches Verfahren enthält:
Kombinieren eines ersten Öls, von Lecithin und Monoglyceriden, um ein Vorgemisch zu bilden, wobei das Vorgemisch auf eine Temperatur erwärmt wird, die ausreichend ist, um im wesentlichen das gesamte Lecithin und die gesamten Monoglyceride in dem ersten Öl aufzulösen, und wobei das Lecithin ausgewählt ist aus der Gruppe bestehend aus Phosphatidylcholin (PC)-reichem Lecithin, hydroxyliertem Lecithin und acetyliertem Lecithin, und wobei die Monoglyceride einen Jodwert haben, der mindestens gleich oder größer als 60 ist; und Zugeben des Vorgemischs zu einem zweiten Öl, um eine Kochzusammensetzung zu bilden, die Lecithin in einer Menge in einem Bereich zwischen 0,05 Gew.-% und 2 Gew.-% der Kochzusammensetzung und Monoglyceride in einer Menge im Bereich zwischen 0,05 Gew.-% und 2 Gew.-% der Kochzusammensetzung aufweist, wobei die Kochzusammensetzung bei einer Temperatur, die gleich oder größer als 10 °C ist, flüssig und transparent ist, und ferner enthaltend dass Kombinieren von Zitronensäureestern mit dem ersten Öl, Lecithin und Monoglyceriden, um das Vorgemisch zu bilden, wobei das Vorgemisch auf eine Temperatur erwärmt wird, die ausreichend ist, um im wesentlichen die gesamten Zitronensäureester in dem ersten Öl aufzulösen.

7. Verfahren nach Anspruch 6, wobei eine Zusammensetzung des ersten Öls im Wesentlichen äquivalent einer Zusammensetzung des zweiten Öls ist.

## Revendications

1. Composition de cuisson liquide non aqueuse comprenant :
une huile végétale non hydrogénée en quantité égale ou supérieure à 90 % en poids de la composition de cuisson, dans laquelle l'huile est non cristalline à une température égale ou supérieure à 10 degrés Celsius ;
de la lécithine en quantité allant de 0,05 % en poids à 2 % en poids de la composition de cuisson, dans laquelle la lécithine est choisie dans le groupe comprenant la lécithine riche en phosphatidylcholine (PC), la lécithine hydroxylée et la lécithine acétylée ; et
des monoglycérides en quantité entre 0,05 % en poids et 2 % en poids de la composition de cuisson, dans laquelle les monoglycérides ayant un indice d'iode au moins égal ou supérieur à 60, et
dans laquelle la lécithine et les monoglycérides sont dispersés et solubles dans l'huile, et
dans laquelle la composition de cuisson est liquide et transparente à une température égale ou supérieure à 10 degrés Celsius, et comprenant en outre :
des esters d'acide organique en quantité entre 0,1 % en poids et 1 % en poids de la composition de cuisson.

2. Composition de cuisson selon la revendication 1, dans laquelle les esters d'acide organique sont des esters d'acide citrique en quantité égale ou inférieure à 0,5 % en poids de la composition de cuisson et la quantité de monoglycérides dans la composition de cuisson se situe entre 0,3 % en poids et 1,0 % en poids.

3. Composition de cuisson selon la revendication 1, dans laquelle les esters d'acide organique sont des esters d'acide citrique neutralisés.

4. Procédé de production d'un produit alimentaire comprenant les étapes consistant à :
fournir une composition de cuisson selon les revendications 1 à 3 ; et
frire le produit alimentaire en utilisant la composition de cuisson.

5. Procédé de production d'une composition de cuisson convenant à une utilisation dans la préparation d'un produit alimentaire, le procédé comprenant les étapes consistant à :
ajouter de la lécithine et des monoglycérides à une huile végétale non hydrogénée non cristalline, dans lequel la lécithine est choisie dans le groupe comprenant la lécithine riche en phosphatidylcholine (PC), la lécithine hydroxylée et la lécithine acétylée et dans lequel les monoglycérides ont un indice d'iode au moins égal ou supérieur à 60 ;
chauffer l'huile à une température entre 60 et 70 degrés Celsius pour dissoudre la lécithine et les monoglycérides dans l'huile et former une composition de cuisson ayant une dispersion stable de lécithine et de monoglycérides, dans lequel la composition de cuisson est transparente et liquide à des températures égales ou supérieures à 10 degrés Celsius, et
comprenant en outre l'addition d'esters d'acide citrique à l'huile avec de chauffer celle-ci, dans lequel les esters d'acide citrique sont également dissolubles dans l'huile lorsque l'huile est chauffée.

6. Procédé de production d'une composition de cuisson convenant à une utilisation dans la préparation d'un produit alimentaire, le procédé comprenant les étapes consistant à :
combiner une première huile, de la lécithine et des monoglycérides pour former un pré-mélange, dans lequel le pré-mélange est chauffé à une température suffisante pour dissoudre essentiellement la totalité de la lécithine et des monoglycérides dans la première huile et dans lequel la lécithine est choisie dans le groupe comprenant la lécithine riche en phosphatidylcholine (PC), la lécithine hydroxylée et la lécithine acétylée et dans lequel les monoglycérides ont un indice d'iode au moins égal ou supérieur à 60 ; et
ajouter le pré-mélange à une seconde huile pour former une composition de cuisson ayant de la lécithine en quantité entre 0,05 % en poids et 2 % en poids de la composition de cuisson et des monoglycérides en quantité entre 0,05 % en poids et 2 % en poids de la composition de cuisson, dans lequel la composition de cuisson est liquide et transparente à une température égale ou supérieure à 10 degrés Celsius C, et
comprenant en outre la combinaison d'esters d'acide citrique avec la première huile, la lécithine et les monoglycérides pour former le pré-mélange, dans lequel le pré-mélange est chauffé à une température suffisante pour dissoudre essentiellement la totalité des esters d'acide citrique dans la première huile.

7. Procédé selon la revendication 6, dans lequel une composition de la première huile est essentiellement équivalente à une composition de la seconde huile.
